# EUROPÄISCHE PATENTSCHRIFT

(11) **EP 2 176 319 B1**
(45) Veröffentlichungstag und Bekanntmachung des Hinweises auf die Patenterteilung: **29.06.2011**
(21) Anmeldenummer: 08853144.7
(22) Anmeldetag: 23.09.2008
(51) Int. Cl.: C08G 77/08, C08G 77/10, C08G 77/12, C08G 77/48, C11D 3/37

(54) **VERFAHREN ZUR HERSTELLUNG VERZWEIGTER SIH-FUNKTIONELLER POLYSILOXANE**
METHOD FOR PRODUCING BRANCHED SIH FUNCTIONAL POLYSILOXANES
PROCÉDÉ POUR PRODUIRE DES POLYSILOXANES RAMIFIÉS À FONCTIONS SIH

(30) Priorität: 21.11.2007 DE 102007055485
(43) Veröffentlichungstag der Anmeldung: 21.04.2010
(73) Patentinhaber: Evonik Goldschmidt GmbH, 45127 Essen (DE)
(72) Erfinder: HENNING, Frauke, 45130 Essen (DE); KNOTT, Wilfried, 45355 Essen (DE); DUDZIK, Horst, 45326 Essen (DE)
(86) Internationale Anmeldenummer: PCT/EP2008/062662
(87) Internationale Veröffentlichungsnummer: WO 2009/065644

(56) Entgegenhaltungen:
- EP-A- 0 568 318
- EP-A- 0 838 547
- EP-A- 1 050 553
- EP-A- 1 520 870
- WO-A-2005/054371
- DE-A1-102005 004 676
- GB-A- 996 646
- JP-A- 2002 179 797
- US-A1- 2005 119 434
- GUSTAVSON W A ET AL: "Metal complex-catalysed redistribution reactions of organosilanes. IV. Redistribution reactions of methylsiloxanes catalysed by transition metal complexes" JOURNAL OF ORGANOMETALLIC CHEMISTRY, ELSEVIER-SEQUOIA S.A. LAUSANNE, CH, Bd. 238, Nr. 1, 19. Oktober 1982 (1982-10-19), Seiten 87-97, XP002316567 ISSN: 0022-328X

## Beschreibung

Die Erfindung betrifft ein Verfahren zur Herstellung von in der Siloxankette verzweigten organomodifizierten Polysiloxanen, bei dem ein verzweigtes Polysiloxan mit endständigen und/oder seitenständigen SiH-Funktionen in nur einem Verfahrensschritt hergestellt und mit organischen Verbindungen weiter funktionalisiert wird.

### Stand der Technik:

Polyorganosiloxane werden nach dem Stand der Technik durch Hydrolyse und Kondensation ausgehend von gemischt substituierten Methyl-chlor-wasserstoff-silanen hergestellt. Eine direkte hydrolytische Kondensation von wasserstoffhaltigen Silanen, wie z. B. Dimethylmonochlorsilan oder Methyldichlorsilan, wird beispielsweise in der US 2,758,124 beschrieben. Man trennt darin die sich bei der Hydrolyse separierende Siloxanphase von der salzsauren Wasserphase ab. Da dieser Prozess anfällig für Vergelungen der Wasserstoffsiloxane ist, beschreibt die DE 11 25 180 ein verbessertes Verfahren unter Nutzung einer organischen Hilfsphase, bei dem das gebildete Wasserstoffsiloxan in einem organischen Lösungsmittel als separate Phase gelöst vorliegt und nach Abtrennung von der sauren Wasserphase und Abdestillation des Lösungsmittels beständig gegen Vergelung ist. Eine weitere Prozessverbesserung im Hinblick auf einen minimierten Lösungsmitteleinsatz beschreibt die EP 0 967 236 und führt in ihrer Lehre aus, vorerst nur geringe Wassermengen in der hydrolytischen Kondensation der Organochlorsilane einzusetzen, so dass im ersten Schritt Chlorwasserstoff gasförmig ausgetrieben wird und als Wertstoff unmittelbar weiteren Verwendungszwecken zugeführt werden kann.

Verzweigte organomodifizierte Polysiloxane können durch eine Vielzahl an Strukturen beschrieben werden. Generell muss unterschieden werden zwischen einer Verzweigung oder Vernetzung, die über die organischen Substituenten eingebracht wird und einer Verzweigung oder Vernetzung innerhalb der Siliconkette. Organische Vernetzer zur Verknüpfung SiH-Gruppen tragender Siloxangerüste sind beispielsweise α,ω-ungesättigte Diolefine, Divinylverbindungen oder Diallylverbindungen, wie beispielsweise in US 6,730,749 oder EP 0 381 318 beschrieben. Diese der Äquilibrierung nachgeschaltete Vernetzung durch Platin-katalysierte Hydrosilylierung bedeutet einen zusätzlichen Verfahrensschritt, bei dem sowohl intramolekulare Verknüpfungen als auch intermolekulare Verknüpfungen stattfinden können. Die Produkteigenschaften werden zudem stark beeinflusst von den unterschiedlichen Reaktivitäten der zu Peroxidbildung neigenden, niedermolekularen organischen difunktionellen Verbindungen.

Eine multiple Vernetzung des Siliconblocks eines organomodifizierten Polysiloxans mit dem organischen Blockcopolymer kann auf verschiedene Arten erfolgen. Die EP 0 675 151 beschreibt die Herstellung eines Polyethersiloxans durch Hydrosilylierung eines Wasserstoffsiloxans mit einem Unterschuss an hydroxyfunktionellem Allylpolyether, bei der nicht umgesetzte SiH-Funktionen unter Zugabe von Natriummethylat mit den Hydroxylgruppen der Polyethersubstituenten über eine SiOC-Bindung verknüpft werden. Der Molmassenaufbau führt zu einer breiten Streuung der Produkteigenschaften, wie z. B. der Viskosität. Einen ähnlichen Ansatz zum Aufbau verzweigter Systeme beschreibt die US 4,631,208, bei der hydroxyfunktionelle Polyethersiloxane mittels Trialkoxysilanen quervernetzt werden. Beide Methoden führen zu einer intermolekularen Vernetzung der Polyethersiloxane mit sowohl schwierig zu steuerndem Molmassenaufbau als auch damit einhergehenden, unvorhersehbaren Viskositätsanstiegen. Man erhält bei Verfolgung der vorgenannten Methoden keine Verzweigung innerhalb des Siloxanteils bei konstanter Molekularmasse, sondern eine Quervernetzung zu makromolekularen Multiblockcopolymeren.

Eine Verzweigung innerhalb der Siloxankette muss daher bereits bei der Herstellung des Wasserstoffsiloxans erfolgen, um die beschriebenen Nachteile der Quervernetzung zu umgehen. Verzweigungen innerhalb der Siloxankette bedingen den synthetischen Einbau von trifunktionellen Silanen, wie z. B. Trichlorsilanen oder Trialkoxysilanen.

Wie dem Fachmann bekannt ist, steigt die Hydrolysegeschwindigkeit der Organochlorsilane in folgender Reihe (C. Eaborn, Organosilicon Compounds, Butterworths Scientific Publications, London 1960, S. 179)

SiCl₄ > RSiCl₃ >> R₂SiCl₂ > R₃SiCl.

Daher besteht bei den Hydrolyse- und Kondensationsreaktionen von Trichlorsilanen eine erhöhte Tendenz zur Ausbildung hochvernetzter Gele im Vergleich zu den langsamer verlaufenden Hydrolyse- und Kondensationsreaktionen von difunktionellen und monofunktionellen Organochlorsilanen. Die etablierten Verfahren zur Hydrolyse und Kondensation von Dichlor- und Monochlorsilanen sind daher nicht ohne weiteres auf Trichlorsilane übertragbar, sondern es müssen Umwege über Mehrstufenprozesse beschritten werden.

Aufbauend auf diese Erkenntnis, muss auch die Herstellung von einfach verzweigten Wasserstoffsiloxanen durch Einbau von maximal einem trifunktionellen Monomer pro Siloxankette gemäß dem Stand der Technik zweistufig durchgeführt werden. In einem ersten Schritt wird ein trifunktionelles, niedermolekulares Wasserstoffsiloxan durch Hydrolyse und Kondensation aus 1,1,3,3-Tetramethyldisiloxan und Methyltriethoxysilan hergestellt, wie z.B. die DE 37 16 372 lehrt. Erst in einem zweiten Schritt kann dann eine Äquilibrierung mit cyclischen Siloxanen zu höheren Molgewichten erfolgen, wie die DE 10 2005 004676 ausführt. Zur weiteren Umsetzung - und daher erst in einem dritten Schritt - kann das so hergestellte, einfach verzweigte Wasserstoffsiloxan nach den an sich bekannten Methoden zur Funktionalisierung SiH-Gruppen aufweisender Siloxanverbindungen mit organischen Substituenten versehen werden.

Zur Synthese mehrfach verzweigter Wasserstoffsiloxane, die per Definition mehr als ein trifunktionelles Monomer pro Siloxankette aufweisen, finden sich im Stand der Technik ebenfalls zweistufige Synthesen. Prinzipiell hat man die Möglichkeit von Wasserstoffsiloxanen auszugehen und die SiH-Funktionen unter Zugabe von Wasser und Edelmetallkatalysator dehydrogenativ in Silanole umzuwandeln, die anschließend wiederum mit Wasserstoffsiloxanen kondensiert werden. Beschrieben wird diese Vorgehensweise in US 6,790,451 und in EP 1 717 260. Abgesehen von den Kosten der Edelmetallkatalyse erschwert die schlechte Lagerstabilität der zu Autokondensation neigenden Silanole eine reproduzierbare, kontrollierte Prozessführung.

Eine weitere, in US 6,790,451 beschriebene Möglichkeit besteht in der Herstellung eines Copolymerisats aus Trichlormethylsilan oder Trialkoxymethylsilan mit Hexamethyldisiloxan oder Trimethylchlorsilan, dort auch MT-Polymer genannt, welches in einem zweiten Schritt gemeinsam mit einem Polydimethyl(methylhydrogen)siloxancopolymer äquilibriert wird. Die Herstellung solcher MT-Polymere erfordert den Einsatz starker Basen oder starker Säuren teils in Kombination mit hohen Reaktionstemperaturen und bringt Präpolymere derart hoher Viskosität hervor, dass deren Neutralisation beträchtlich erschwert und somit die Weiterverarbeitung zu Endprodukten konstanter Zusammensetzung und Qualität signifikant eingeschränkt ist.

Gemäß EP 0 675 151 wird zuerst die Hydrolyse und Kondensation des SiH-freien, verzweigten Siliconpolymers in Xylol durchgeführt und im zweiten Schritt führt die Äquilibrierung mit Methylhydrogenpolysiloxan zum verzweigten Wasserstoffsiloxan. Auch hier sind zwei Verfahrensschritte zwingend erforderlich, bei denen die SiH-Funktionen erst im zweiten Schritt eingebracht werden.

Aufgabe der vorliegenden Erfindung war deshalb die Bereitstellung eines einfachen, einstufigen Verfahrens zur Herstellung verzweigter Wasserstoffsiloxane zu finden, ohne die, durch die Ausgangsstoffe eingebrachten, SiH-Funktionen in Nebenreaktionen abzubauen und dabei auf die Verwendung aliphatischer bzw. aromatischer Lösungsmittel zur Bildung einer zusätzlichen Hilfsphase zu verzichten.

Überraschenderweise wurde nun gefunden, dass eine Kondensation und Äquilibrierung SiH-funktioneller Siloxane mit Trialkoxysilanen unter hydrolytisch sauren Bedingungen in nur einem Schritt bei weitestgehendem Erhalt an eingebrachten SiH-Funktionen möglich ist. Dieses Ergebnis ist für den Fachmann vollkommen überraschend, da sich weder die beschriebene Vergelungsneigung trifunktioneller Silane noch die Nebenreaktion eines säureinduzierten dehydrogenativen SiH-Abbaues (C. Eaborn, Organosilicon Compounds, Butterworths Scientific Publications, London 1960, S. 200*)* störend bemerkbar machen.

Gegenstand der vorliegenden Erfindung ist deshalb ein Verfahren gemäß Anspruch 1 zur Herstellung von verzweigten SiH-funktionellen Siloxanen durch Umsetzung einer Mischung, enthaltend
a) ein oder mehrere SiH-funktionelle Siloxane,
b) ein oder mehrere SiH-Funktion-freie Siloxane und
c) ein oder mehrere Trialkoxysilane,
unter Zugabe von Wasser und in Anwesenheit von mindestens einem Brönstedt-sauren Katalysators, welches dadurch gekennzeichnet ist, dass die Umsetzung in einem Verfahrensschritt durchgeführt wird.

Weitere Gegenstände der Erfindung sind gekennzeichnet durch die nachfolgende Beschreibung und den Inhalt der Ansprüche/Unteransprüche.

Das erfindungsgemäße Verfahren hat den Vorteil, dass verzweigte SiH-funktionelle Siloxane in einem einzigen Verfahrensschritt hergestellt werden können. Das Verfahren hat außerdem den Vorteil, dass bei der Umsetzung die SiH-Funktionen, insbesondere die endständigen SiH-Funktionen nicht oder nur zu einem geringen Anteil verloren gehen. Insbesondere der ausbleibende, vom Fachmann erwartete Abbau der endständigen SiH-Funktionen (Dimethylhydrogensiloxy-Einheiten) ist überraschend.

Das erfindungsgemäße Verfahren hat weiterhin den Vorteil, dass keine Phasentrennung erforderlich ist, bei der einerseits die wässrige Hilfsphase als Abfall zu entsorgen ist und andererseits das Produkt durch Abdestillation der verwendeten unpolaren Lösungsmittel wie beispielsweise Toluol oder Xylol aufgereinigt werden muss. Das erfindungsgemäße Verfahren erfordert im Wesentlichen lediglich eine schonende Abdestillation der niedrig siedenden Reaktionsprodukte, nämlich der Alkohole die aus der Hydrolyse und Kondensation hervorgehen.

Das erfindungsgemäße Verfahren hat hinsichtlich der Qualität und Lagerstabilität der Endprodukte den Vorteil, dass die erfindungsgemäß hergestellten verzweigten Wasserstoffsiloxane und die daraus gefertigten Folgeprodukte keine Vergelungsneigung besitzen und somit über einen längeren Zeitraum gelagert werden können, ohne dass sich die Viskosität der Produkte maßgeblich verändert.

Das erfindungsgemäße Verfahren zur Herstellung von verzweigten SiH-funktionellen Siloxanen sowie deren Verwendung zur Herstellung von in der Siloxankette verzweigten organomodifizierten Polysiloxanen sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die verschiedenen Monomereinheiten der in den Formeln angegebenen Verbindungen (Siloxanketten bzw. Polyoxyalkylenkette) können untereinander blockweise aufgebaut sein oder einer statistischen Verteilung unterliegen. Die in den Formeln verwendeten Indices, insbesondere die Indices k, m, m¹, n und n¹ sind als statistische Mittelwerte zu betrachten. Der Verzweigungsgrad k ist in Übereinstimmung mit der gängigen Definition gegeben durch die Anzahl der an drei Sauerstoffatome gebundenen Si-Atome.

Das erfindungsgemäße Verfahren zur Herstellung von verzweigten SiH-funktionellen Siloxanen durch Umsetzung einer Mischung, enthaltend
a) ein oder mehrere SiH-funktionelle Siloxane,
b) ein oder mehrere SiH-Funktion-freie Siloxane und
c) ein oder mehrere Trialkoxysilane,
unter Zugabe von Wasser und in Anwesenheit von mindestens einem Brönstedt-sauren Katalysator, zeichnet sich dadurch aus, dass die Umsetzung in einem (einzigen) Verfahrensschritt durchgeführt wird. Vorzugsweise werden mit dem erfindungsgemäßen Verfahren in der Siloxankette verzweigte Wasserstoffsiloxane der allgemeinen Formel (I) hergestellt, 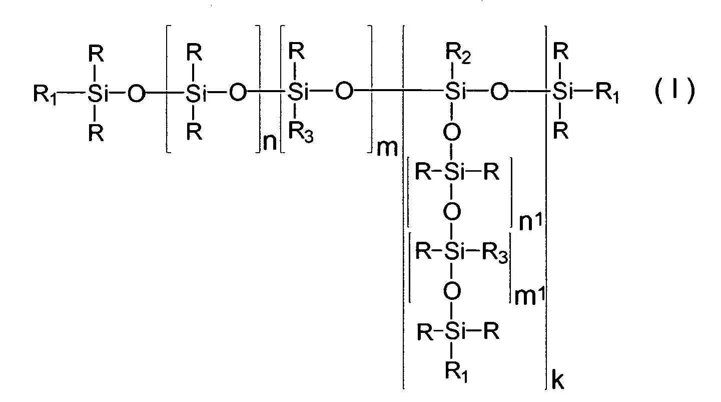 worin
- n und n¹: unabhängig voneinander 0 oder größer 0, vorzugsweise 10 bis 200, bevorzugt 15 bis 100 sind und (n+n¹) < 500, vorzugs- weise < 200, bevorzugt < 100, ist,
- m und m¹: unabhängig voneinander 0 oder größer 0, vorzugsweise 0 bis 30, bevorzugt 0,1 bis 25 sind und (m+m¹) < 60, vorzugsweise < 30, bevorzugt < 25 ist,
- k: 1 bis 10, vorzugsweise 1 bis 5, ist,
- R: mindestens ein Rest aus der Gruppe linearer, cyclischer oder verzweigter, aliphatischer oder aromatischer, ge- sättigter oder ungesättigter Kohlenwasserstoffreste mit 1 bis zu 20 C-Atomen, vorzugsweise jedoch ein Methylrest ist,
- R₁: unabhängig voneinander Wasserstoff oder R ist,
- R₂: unabhängig voneinander Wasserstoff, R oder ein mit Hetero- atomen substituierter, funktioneller, organischer, ge- sättigter oder ungesättigter Rest, vorzugsweise ausgesucht aus der Gruppe der Alkyl-, Chloralkyl-, Chloraryl-, Fluor- alkyl-, Cyanoalkyl-, Acryloxyaryl-, Acryloxyalkyl-, Me- thacryloxyalkyl-, Methacryloxypropyl- oder Vinyl-Reste, be- sonders bevorzugt ein Methyl-, Chlorpropyl-, Vinyl- oder ein Methacryloxypropyl-Rest ist,
- R₃: unabhängig voneinander Wasserstoff oder R ist, mit der Maßgabe, dass mindestens einer der Reste R₁, R₂ oder R₃ Wasserstoff ist. Vorzugsweise sind alle Reste R und alle Reste R₁ bis R₃, die ein Rest R sind, ein Methylrest.

Die erhaltenen verzweigten SiH-funktionellen Siloxane, vorzugsweise die verzweigten SiH-funktionellen Siloxane der Formel (I) können solche sein, bei denen die SiH-Funktionen rein endständig, rein seitenständig oder gemischt end- und seitenständig im Siloxan angeordnet sind.

Als SiH-funktionelle Siloxane können solche eingesetzt werden, bei denen die SiH-Funktionen rein endständig, rein seitenständig oder gemischt end- und seitenständig im Siloxan angeordnet sind. Als SiH-funktionelle Siloxane können z. B. lineare Polymethylhydrogensiloxane, wie beispielsweise HMS-993 der Firma Gelest Inc., lineare Polydimethylmethylhydrogensiloxane wie beispielsweise HMS-031 und/oder HMS-071 der Firma Gelest Inc., lineare α,ω-Dihydrogenpolydimethylsiloxane, wie beispielsweise 1,1,3,3-Tetramethyldisiloxan und/oder 1,1,3,3,5,5-Hexamethyltrisiloxan, höhermolekulare Oligomere, wie beispielsweise DMS-H03 und/oder DMS-H11 der Firma Gelest Inc., cyclische Polymethylhydrogensiloxane, wie beispielsweise Tetramethylcyclotetrasiloxan oder Pentamethylcyclopentasiloxan und cyclische Polydimethylmethylhydrogensiloxane wie beispielsweise Heptamethylcyclotetrasiloxan und/oder Nonamethylcyclopentasiloxan, oder Mischungen davon eingesetzt werden. Besonders bevorzugt werden als SiH-funktionelle Siloxane 1,1,3,3-Tetramethyldisiloxan, DMS-H03, HMS-993 (jeweils Firma Gelest Inc.) und Pentamethylcyclopentasiloxan eingesetzt.

Als SiH-Funktion-freie Siloxane können z. B. lineare Polydimethylsiloxane, wie beispielsweise Hexamethyldisiloxan oder cyclische Polydimethylsiloxane, wie beispielsweise Octamethylcyclotetrasiloxan und/oder Decamethylcyclopentasiloxan, eingesetzt werden. Vorzugsweise werden Hexamethyldisiloxan und Decamethylcyclopentasiloxan eingesetzt.

Als Trialkyoxysilane können prinzipiell alle Trialkoxysilane eingesetzt werden. Als Trialkoxysilane können solche eingesetzt werden, bei denen die Alkoxyreste alle gleich, alle unterschiedlich oder teilweise gleich sind. Als Trialkoxysilane können insbesondere Triethoxysilane, vorzugsweise Methyltriethoxysilan, Alkyltriethoxysilane wie beispielsweise n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere Alkyltriethoxysilane, wie beispielsweise Chlorpropyltriethoxysilan, Tridecafluoro-1,1,2,2-tetrahydrooctyltriethoxysilan, Nonafluoro-1,1,2,2-tetrahydrohexyltriethoxysilan, 3-Cyanopropyltriethoxysilan, Trialkoxysilane, insbesondere Triethoxysilane mit funktionellen Gruppen, wie beispielsweise 3-Methacryloxypropyltriethoxysilan, 3-Mercaptopropyltriethoxysilan, 5-(Bicycloheptenyl)triethoxysilan, Phenyltriethoxysilan, (p-Chloromethyl)phenyltriethoxysilan, N-(3-Triethoxysilylpropyl)-4,5-dihydroimidazol oder Dihydro-3-[3-(triethoxysilyl)propyl]furan-2,5-dion, eingesetzt werden. Es kann vorteilhaft sein, wenn organisch funktionalisierte Trialkoxysilane als Verzweigungseinheit eingesetzt werden (einäquilibiert werden).

Die Anteile an kettenterminierenden Trialkylsiloxyeinheiten, insbesondere Trimethylsiloxyeinheiten (M-Einheiten) und/oder Dialkylhydrogensiloxyeinheiten, insbesondere Dimethylhydrogensiloxyeinheiten (M^{H}-Einheiten), an kettenverlängernden Dialkylsiloxyeinheiten, insbesondere Dimethylsiloxyeinheiten (D-Einheiten) und/oder Alkylhydrogensiloxyeinheiten, insbesondere Methylhydrogensiloxyeinheiten (D^{H}-Einheiten) sowie an kettenverzweigenden Alkylsiloxyeinheiten, insbesondere Methylsiloxyeinheiten (T-Einheiten) und/oder mit funktionellen Gruppen substituierten T-Einheiten können über einen weiten Bereich variiert werden. Das molare Verhältnis der Summe aus M-Einheiten und M^{H}-Einheiten zu T-Einheiten beträgt vorzugsweise von 3:1 bis 1:1. Übersteigt die molare Menge der T-Einheiten die der M-Einheiten, erhält man unerwünschte, makromolekulare stark vernetzte Gele bis Harze.

Die Reaktionsmischung kann durch beliebiges Mischen der Komponenten erhalten werden. Vorzugsweise werden zunächst die SiH-funktionellen Siloxane, die SiH-Funktion-freien Siloxane und die gegebenenfalls substituierten Trialkoxysilane gemischt.

Vorzugsweise wird nach dem Vermischen der Ausgangsstoffe, also der SiH-funktionellen Siloxane, der SiH-Funktion-freien Siloxane und der Trialkoxysilane, mindestens ein Brönstedt-saurer Katalysator zur Katalyse der Hydrolyse und Kondensation zugegeben. Der Katalysator kann der Reaktionsmischung ganz oder teilweise direkt zugegeben oder während der Reaktion in beliebiger Reihenfolge zudosiert werden.

Vorzugsweise werden zunächst die Ausgangsstoffe vermischt, dann der Katalysator zugegeben und anschließend das Wasser zugefügt. Als Brönstedt-saure Katalysatoren können die nach dem Stand der Technik bekannten Säuren (Äquilibriersäuren) für Siloxane, also Mineralsäuren, wie beispielsweise Schwefelsäure, aber auch Sulfonsäuren, saure Tonerden oder saure Ionenaustauscherharze, wie beispielsweise die unter den Markennamen Amberlite^{®}, Amberlyst^{®} oder Dowex^{®} und Lewatit^{®} bekannten Produkte eingesetzt werden.

In dem erfindungsgemäßen Verfahren können sowohl natürliche Ionenaustauscher, wie beispielsweise Zeolithe, Montmorillonite, Attapulgite, Bentonite und andere Aluminiumsilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-Formaldehyd-Harzen oder Copolymerisate aus Styrol-Divinylbenzol, in die zahlreiche "Ankergruppen" unterschiedlicher Acidität eingebaut sind.

Als Brönstedt-saure Katalysatoren werden in dem erfindungsgemäßen Verfahren vorzugsweise solche eingesetzt, wie sie in EP 1 439 200 beschrieben sind. Diese Schrift und die in ihr als Stand der Technik zitierten Schriften werden hiermit als Referenz eingeführt und gelten als Teil des Offenbarungsgehaltes der vorliegenden Erfindung.

Es kann vorteilhaft sein, wenn in dem erfindungsgemäßen Verfahren als Katalysator mindestens eine Säure (Katalysator 1) und mindestens ein saurer(saures) Ionenaustauscher(-harz) (Katalysator 2) eingesetzt wird. Als Säure kann dabei eine Mineralsäure, vorzugsweise Schwefelsäure und/oder, vorzugsweise eine organische Sulfonsäure, vorzugsweise Trifluormethansulfonsäure eingesetzt werden. Diese Mischung wird vorzugsweise direkt der Reaktionsmischung zugegeben. Bevorzugt wird als Katalysator eine Mischung aus Trifluormethansulfonsäure und einem sulfonsauren Ionenaustauscherharz, vorzugsweise Lewatit^{®} K 2621 (Bayer Material Science) eingesetzt.

Werden als Katalysator die zwei Katalysatoren 1 und 2 eingesetzt, so kann es vorteilhaft sein, wenn zu der Mischung an Ausgangsstoffen zunächst der Katalysator 1, vorzugsweise vollständig zugegeben wird, anschließend das Wasser zugefügt wird und erst nach der vorzugsweise vollständigen Zugabe von Wasser der Katalysator 2 zugegeben wird. Die Katalysatoren 1 und 2 können aber auch beide vor der Zugabe des Wassers den Ausgangsstoffen zugegeben werden.

In dem erfindungsgemäßen Verfahren wird dem Reaktionsgemisch vorzugsweise soviel an saurem Katalysator zugegeben, dass die Menge an sauren Katalysatoren von 0,01 bis 10 Gew.-% bezogen auf die Summe der Masse an eingesetzten Ausgangsstoffen (also Summe der SiH-funktionellen Siloxane, der SiH-Funktion-freien Siloxane und der Trialkoxysilane) beträgt. Je nach Art und Konzentration des eingesetzten Katalysators können bestimmte Unterbereiche dieses Bereichs bevorzugt sein. Besonders bevorzugt ist beispielsweise die Verwendung von Trifluormethansulfonsäure in Mengen von 0,05 Gew.-% bis 0,5 Gew.-%. Wird als Katalysator ein Ionenaustauscherharz allein eingesetzt, so beträgt die eingesetzte Masse an Katalysator vorzugsweise von 3 bis 10 Gew.-%. Wird als Katalysator eine Kombination von Mineralsäure und/oder organischen Sulfonsäure mit einem Ionenaustauscherharz eingesetzt, so beträgt die Masse an eingesetztem Ionenaustauscherharz vorzugsweise von 3 bis 6 Gew.-%.

In dem erfindungsgemäßen Verfahren werden pro Mol eingesetztem Trialkoxysilan vorzugsweise von 0,5 bis 30 Mol Wasser eingesetzt. Zur Hydrolyse und Kondensation werden bevorzugt 1 bis 5 Mol Wasser pro Mol trifunktionellem Trialkoxysilan eingesetzt. Das Wasser kann in einem Schritt zugegeben oder bevorzugt über einen längeren Zeitraum zudosiert werden Aufgrund der gewählten Wassermenge tritt eine Phasentrennung üblicherweise nicht auf. Gegebenenfalls kann das Wasser zur besseren Homogenisierung mit einer kleinen Menge, bezogen auf die Gesamtgewichtsmenge an Siloxanen, eines kurzkettigen Alkohols versetzt werden, beispielsweise mit Methanol oder Ethanol. Als kleine Menge ist eine Menge zu verstehen, die ausreicht das Wasser ganz oder teilweise in der Reaktionsmischung zu homogenisieren und nicht zur Bildung einer separaten Phase führt.

Die Umsetzung wird im erfindungsgemäßen Verfahren vorzugsweise bei einer Temperatur von 0° C bis 100° C durchgeführt. Vorzugsweise erfolgt die Umsetzung (gleichzeitige Durchführung von Hydrolyse-, Kondensations- und Äquilibrierungsreaktionen) bei einer Temperatur von 20 bis 60 °C.

Nach Beendigung der Reaktion können die flüchtigen Nebenprodukte der Kondensation, z. B. durch schonende Vakuumdestillation entfernt werden. Falls erforderlich oder gewünscht kann eine Neutralisation, z. B. mit einem basischen Salz, vorzugsweise mit Natriumhydrogencarbonat, erfolgen.

Die so erhaltenen, erfindungsgemäßen, in der Kette verzweigten Wasserstoffsiloxane sind vorzugsweise stabile, klare, farblose Flüssigkeiten, die bevorzugt keine oder zumindest nur geringe Anteile an flüchtigen niedermolekularen Verbindungen enthalten. Die in den via Eduktgemisch eingewogenen SiH-Äquivalenten, d.h. vor der Umsetzung gemessenen und die in den nach dem erfindungsgemäßen Verfahren hergestellten Wasserstoffsiloxanen (d.h. nach der Umsetzung) gemessenen SiH-Äquivalente sind innerhalb der Analysengenauigkeit übereinstimmend, was den weitestgehenden Erhalt der eingesetzten SiH-Funktionen belegt.

Durch das erfindungsgemäße Verfahren können in der Siloxankette verzweigte Wasserstoffsiloxane, insbesondere solche gemäß Formel (I), hergestellt werden. Vorzugsweise weisen die in der Siloxankette verzweigten Wasserstoffsiloxane eine Viskosität, gemessen mit einem Rotationsviskosimeter der Marke Haake RV12 bei 25°C, von 10 bis 2000 mPa*s, bevorzugt von 15 bis 600 mPa*s, auf. Der mittlere Verzweigungsgrad der erfindungsgemäßen in der Siloxankette verzweigten Wasserstoffsiloxane beträgt vorzugsweise 1 bis 10, bevorzugt 1 bis 5. Die erfindungsgemäßen in der Siloxankette verzweigten Wasserstoffsiloxane können zur Herstellung von in der Siloxankette verzweigten organomodifizierten Polysiloxanen verwendet werden.

In einer bevorzugten Ausführungsform des erfindungsgemäßen Verfahrens erfolgt die Herstellung von in der Siloxankette verzweigten organomodifizierten Polysiloxanen durch vollständige oder teilweise Umsetzung der erfindungsgemäß hergestellten in der Siloxankette verzweigten Wasserstoffsiloxane, vorzugsweise Wasserstoffsiloxane der Formel (I) mit Verbindungen, die mindestens eine, vorzugsweise genau eine Doppelbindung pro Molekül aufweisen, durch Edelmetall-katalysierte, insbesondere Platin-katalysierte Hydrosilylierung. Durch diese Umsetzung werden vorzugsweise Copolymere der allgemeinen Formel (II) 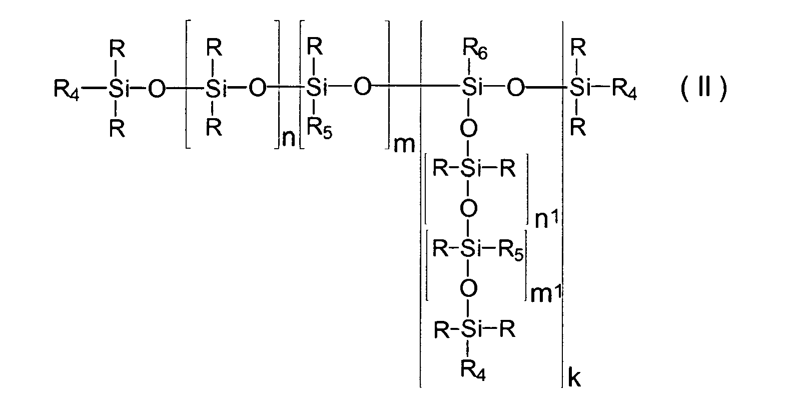 erhalten, worin
- n und n¹: unabhängig voneinander 0 oder größer 0, vorzugsweise 10 bis 200, insbesondere 15 bis 100 sind und (n+n¹) < 500, vor- zugsweise < 200, insbesondere < 100 ist,
- m und m¹: unabhängig voneinander 0 oder größer 0, vorzugsweise 0 bis 30, insbesondere 0,1 bis 25 sind und (m+m¹) < 60, vorzugs- weise < 30, insbesondere < 25 ist,
- k: 1 bis 10, vorzugsweise 1 bis 5 ist,
- R: mindestens ein Rest aus der Gruppe linearer, cyclischer oder verzweigter, aliphatischer oder aromatischer, ge- sättigter oder ungesättigter Kohlenwasserstoffreste mit 1 bis zu 20 C-Atomen, vorzugsweise ein Methylrest ist, wobei besonders bevorzugt alle Reste R Methylreste sind,
- R₄ CH₂-R^{IV} CH₂-CH₂-: R und/oder

CH₂-CH₂-CH₂-O-(CH₂-CH_{2O}-)ₓ-(CH₂-CH(R')O-)_{y}-(SO)_{z}-R",

CH₂-CH₂-O- (CH₂-CH₂O-)ₓ- (CH₂-CH (R') O-)_{y}-R"

CH₂-R^{IV}

CH₂-CH₂-(O)ₓ,-R^{IV}

CH₂-CH₂-CH₂-O-CH₂-CH (OH) -CH₂OH

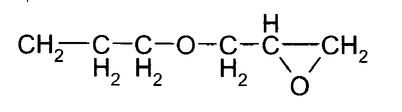

CH₂-CH₂-CH₂-O-CH₂-C (CH₂OH) ₂-CH₂-CH₃

ist, worin
- x: 0 bis 100, vorzugsweise 0 bis 50,
- x': 0 oder 1,
- y: 0 bis 100, vorzugsweise 0 bis 50,
- z: 0 bis 100, vorzugsweise 0 bis 10,
- R': eine gegebenenfalls substituierte, beispielsweise mit Alkylresten, Arylresten oder Halogenalkyl- oder Halo- genarylresten substituierte, Alkyl- oder Arylgruppe mit 1 bis 12 C-Atomen ist und
- R": einen Wasserstoffrest oder eine Alkylgruppe mit 1 bis 4 C- Atomen, eine Gruppe -C(O)-R"' mit R"' = Alkylrest, eine Gruppe -CH₂-O-R', eine Alkylarylgruppe, wie z. B. eine Ben- zylgruppe, die Gruppe -C(O)NH-R' bedeutet,
- R^{IV}: ein gegebenenfalls substituierter, z. B. mit Halogenen sub- stituierter, Kohlenwasserstoffrest mit 1 bis 50, vorzugs- weise 9 bis 45, bevorzugt 13 bis 37 C-Atomen ist,
- SO: ein Styroloxid-Rest -CH(C₆H₅)-CH₂-O- ist,
- R₅: R und/oder R₄ sein kann,
- R₆, R, R₄: und/oder ein mit Heteroatomen substituierter, funktioneller, organischer, gesättigter oder ungesättigter Rest ausgesucht aus der Gruppe der Alkyl-, Chloralkyl Chloraryl-, Fluoralkyl-, Cyanoalkyl-, Acryloxyaryl-, Acryl- oxyalkyl-, Methacryloxyalkyl-, Methacryloxypropyl- oder Vi- nyl-Rest sein kann,
mit der Maßgabe, dass mindestens ein Substituent aus R₄, R₅ und R⁶ nicht R ist. Die verschiedenen Monomereinheiten der Siloxankette und auch der Polyoxyalkylenkette können unter- einander blockweise aufgebaut sein oder einer statistischen Verteilung unterliegen.

Die edelmetallkatalysierte Hydrosilylierung der erfindungsgemäßen verzweigten Wasserstoffsiloxane kann z. B. wie im Stand der Technik, z. B. in EP 1 520 870, beschrieben durchgeführt werden.

Als Verbindungen, die zumindest eine Doppelbindung pro Molekül aufweisen, können z. B. α-Olefine, Vinylpolyoxyalkylene und/oder Allylpolyoxyalkylene eingesetzt werden. Vorzugsweise werden Vinylpolyoxyalkylene und/oder Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugt werden als Verbindungen, die zumindest eine Doppelbindung pro Molekül aufweisen, die in den Beispielen genannten α-Olefine, Vinylpolyoxyalkylene und/oder Allylpolyoxyalkylene eingesetzt.

In einer weiteren bevorzugten Ausführungsform des erfindungsgemäßen Verfahrens erfolgt die Herstellung von in der Siloxankette verzweigten organomodifizierten Polysiloxanen durch vollständige oder teilweise Umsetzung der erfindungsgemäß hergestellten in der Siloxankette verzweigten Wasserstoffsiloxane, vorzugsweise Wasserstoffsiloxane der Formel (I) mit Verbindungen, die eine Hydroxylgruppe pro Molekül aufweisen, durch mit Lewissäuren katalysierte dehydrogenative Verknüpfung. Die Lewis-sauer katalysierte dehydrogenative Verknüpfung von hydroxyfunktionellen Verbindungen an die erfindungsgemäß hergestellten verzweigten Wasserstoffsiloxane, insbesondere solche der Formel (I) kann wie im Stand der Technik beschrieben durchgeführt werden. Vorzugsweise erfolgt die dehydrogenative Verknüpfung wie in DE 10 2005 004 676 beschrieben.

Durch die dehydrogenative Verknüpfung werden vorzugsweise Copolymere der allgemeinen Formel (III) 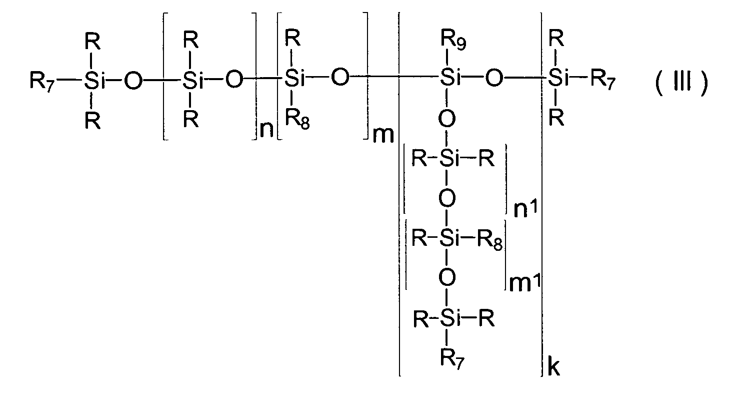
- n und n¹: unabhängig voneinander 0 oder größer 0, vorzugsweise 10 bis 200, bevorzugt 15 bis 100 sind und (n+n¹) < 500, vorzugs- weise < 200, bevorzugt < 100 ist,
- m und m¹: unabhängig voneinander 0 oder größer 0, vorzugsweise 0 bis 30, bevorzugt 0,1 bis 25 sind und (m+m¹)< 60, vorzugsweise < 30, bevorzugt < 25 ist,
- k: 1 bis 10, vorzugsweise 1 bis 5 ist,
- R: mindestens ein Substituent aus der Gruppe linearer, cyc- lischer oder verzweigter, aliphatischer oder aromatischer, gesättigter oder ungesättigter Kohlenwasserstoffreste mit 1 bis zu 20 C-Atomen, vorzugsweise ein Methylrest ist, wobei besonders bevorzugt alle Reste R ein Methylrest sind,
- R₇: R und/oder O- (CH₂-CH₂O-)ₓ- (CH₂-CH (R') O-)_{y}- (SO) _{z}-R^{V} wobei x, y, z, R' und SO die für Formel (II) genannten De- finitionen haben und R^{V} einen linearen, zyklischen oder verzweigten, gesättigten oder ungesättigten, gegebenenfalls mit Heteroatomen sub- stituierten Alkylrest darstellt,
- R₈: R und/oder R₇ sein kann,
- R₉: R, R₇ und/oder ein mit Heteroatomen substituierter, funktioneller, organischer, gesättigter oder ungesättigter Rest ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste sein kann,
mit der Maßgabe, dass mindestens einer der Reste R₇, R₈ und R₉ nicht R ist.

Als hydroxyfunktionelle Verbindungen werden vorzugsweise hydroxyfunktionelle Polyoxyalkylene eingesetzt. Besonders bevorzugte Verbindungen sind z. B. Methylpolyoxyalkenole oder Butylpolyoxyalkenole mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können. Besonders bevorzugt werden als hydroxyfunktionelle Verbindungen die in den Beispielen genannten hydroxyfunktionellen Polyoxyalkylene eingesetzt.

Durch die Verwendung der erfindungsgemäßen, in der Siloxankette verzweigten Wasserstoffsiloxane zur Herstellung von in der Siloxankette verzweigten organomodifizierten Polysiloxane können entsprechende organomodifizierte, in der Siloxankette verzweigte Polysiloxane, insbesondere solche der Formeln (II) oder (III) erhalten werden. Diese erfindungsgemäß hergestellten, in der Siloxankette verzweigten, organomodifizierten Polysiloxane können z. B. als grenzflächenaktive Silicontenside verwendet werden.

Die erfindungsgemäß hergestellten organo- und insbesondere polyethermodifizierten, verzweigten Siloxane (k ≥ 1) können allein bzw. auch in Abmischung mit anderen, unverzweigten organomodifizierten Siloxanen (k < 1) als wertvolle grenzflächenaktive Wirkstoffe Eingang in technische Anwendungen finden. Insbesondere gestattet die hier beschriebene Abmischung die Definition eines breiten Wirkspektrums solcher Tenside, die Eingang in die Herstellung von Polyurethanschäumen, z. B. als Schaumstabilisatoren, nehmen.

Es versteht sich von selbst, dass durch das Abmischen der erfindungsgemäß hergestellten organo- und insbesondere polyethermodifizierten, verzweigten Siloxane (k ≥ 1) mit unverzweigten Siloxanen Gemische erhalten werden können, die wertvolle grenzflächenaktive Wirkstoffe sind, die aber, je nach Mischungsverhältnis, auch einen mittleren molekularen Verzweigungsgrad von > 1 aufweisen können. Auch ist es selbstverständlich möglich, die erfingdungsgemäß hergestellten organo- und insbesondere polyethermodifizierten, verzweigten Siloxane (k ≥ 1) mit Silizium-freien Verbindungen, wie z. B. Lösungsmitteln, insbesondere Glykolen oder Polyethern, in weiten Bereichen zu mischen. Auch solche Mischungen können wertvolle grenzflächenaktive Zusammensetzungen sein. Der per ²⁹Si -NMR bestimmte mittlere molekulare Verzeigungsgrad ändert sich dabei naturgemäß nicht.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Die in den Beispielen angegebenen Viskositäten sind mit einem Rotationsviskosimeter der Marke Haake RV12 bei 25°C ermittelt worden. Der mittlere Verzweigungsgrad gibt die Anzahl der Verzweigungen an einem Si-Atom (die Anzahl der T-Einheiten) im Molekül, gemittelt über alle Moleküle, an.

### Beispiel 1 (erfindungsgemäß):

44,2 g (0,248 Mol) Methyltriethoxysilan (*Dynasylan*^{®} *MTES* der Firma Evonik Degussa GmbH), 138,3 g eines α,ω-Dihydrogenpolydimethylsiloxans mit einem Wasserstoffgehalt von 3,09 val SiH/kg und 95,1 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,16 ml Trifluormethansulfonsäure (erhältlich bei Sigma Aldrich) zugegeben und 30 Minuten gerührt. Innerhalb von weiteren 30 Minuten wurde unter Rühren eine Mischung aus 13,4 g deionisiertem Wasser und 20 ml Methanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 50 mbar für 1 Stunde bei 40 °C abdestilliert. Danach ließ man weitere 4 Stunden bei 40 °C nachreagieren, rührte 5,7 g Natriumhydrogencarbonat ein und filtriert ab. Man erhielt eine klare, farblose Flüssigkeit mit einem Wasserstoffgehalt von 1,62 val SiH/kg (theoretischer Wert = 1,64 val SiH/kg). Mit einem NMR-Gerät der Firma Bruker, Typ DPX 400 wurde ein ²⁹Si-NMR-Spektrum des erhaltenen Produktes aufgenommen und mit der systemimmanenten Software ausgewertet. Aus dem ²⁹Si-NMR-Spektrum errechnete sich ein mittlerer Verzweigungsgrad von 2,0.

### Beispiel 2 (erfindungsgemäß):

44,2 g (0,248 Mol) Methyltriethoxysilan (*Dynasylan*^{®} *MTES* der Firma Evonik Degussa GmbH), 138,3 g eines α,ω-Dihydrogenpolydimethylsiloxans mit einem Wasserstoffgehalt von 3,09 val SiH/kg und 95,1 g Decamethylcyclopentasiloxan (erhältlich bei der Firma Gelest Inc.) wurden in einem Vierhalskolben ausgestattet mit einem KPG-Rührer, einem Tropftrichter, einem Innenthermometer und einer Destillationsbrücke unter Rühren bei Raumtemperatur vorgelegt, 17,1 g eines vorgetrockneten sulfonsauren Kationenaustauscherharzes (Lewatit^{®} K 2621, 10 Gew.-% Wassergehalt - bestimmt in Anlehnung an die Karl-Fischer-Methode) zugegeben und 30 Minuten gerührt. Innerhalb von weiteren 30 Minuten wurde unter Rühren eine Mischung aus 6,7 g deionisiertem Wasser und 10 ml Methanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 50 mbar 1 Stunde bei 40 °C abdestilliert. Danach ließ man weitere 4 Stunden bei 40 °C nachreagieren und filtrierte ab. Es wurde eine klare, farblose Flüssigkeit mit einem Wasserstoffgehalt von 1,60 val SiH/kg (theoretischer Wert = 1,64 val SiH/kg) erhalten. Aus dem ²⁹Si-NMR-Spektrum errechnete sich ein mittlerer Verzweigungsgrad von 1,8.

### Beispiel 3 (erfindungsgemäß):

44,2 g (0,248 Mol) Methyltriethoxysilan (*Dynasylan*^{®} *MTES* der Firma Evonik Degussa GmbH), 138,3 g eines α,ω-Dihydrogenpolydimethylsiloxans mit einem Wasserstoffgehalt von 3,09 val SiH/kg und 95,1 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,16 ml Trifluormethansulfonsäure wurden zugegeben und es wurde 30 Minuten gerührt. Innerhalb von weiteren 30 Minuten wurde unter Rühren eine Mischung aus 13,4 g deionisiertem Wasser und 20 ml Methanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 50 mbar 1 Stunde bei 40 °C abdestilliert. Nach Neutralisation mit 5,7 g Natriumhydrogencarbonat und Filtration wurden 17,1 g des vorgetrockneten sulfonsauren Kationenaustauscherharzes Lewatit^{®} K 2621 zugegeben, 4 Stunden bei 40 °C gerührt und abfiltriert. Man erhielt eine klare, farblose Flüssigkeit mit einer Viskosität von 35 mPa*s und einem Wasserstoffgehalt von 1,60 val SiH/kg (theoretischer Wert = 1,64 val SiH/kg). Aus dem ²⁹Si-NMR-Spektrum errechnete sich ein mittlerer Verzweigungsgrad von 2,7.

### Beispiel 4 (nicht erfindungsgemäß):

44,2 g (0,248 Mol) Methyltriethoxysilan (*Dynasylan*^{®} *MTES* der Firma Evonik Degussa GmbH) und 95,1 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,08 ml Trifluormethansulfonsäure wurden zugegeben und es wurde 6 Stunden bei 50 °C gerührt. Innerhalb von 30 Minuten wurde unter Rühren eine Mischung aus 6,7 g deionisiertem Wasser und 10 ml Methanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 50 mbar 1 Stunde bei 40 °C abdestilliert. Man erhielt einen festen, transparenten Gelkuchen.

### Beispiel 5 (nicht erfindungsgemäß):

44,2 g (0,248 Mol) Methyltriethoxysilan (*Dynasylan*^{®} *MTES* der Firma Evonik Degussa GmbH) und 95,1 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,08 ml Trifluormethansulfonsäure zugegeben und 6 Stunden bei 50 °C voräquilibriert. 138,3 g eines α,ω-Dihydrogenpolydimethylsiloxans mit einem Wasserstoffgehalt von 3,09 val SiH/kg wurden bei Raumtemperatur zugemischt und nach 30 minütigem Rühren innerhalb von 15 Minuten eine Mischung aus 6,7 g deionisiertem Wasser und 10 ml Methanol zugetropft. Nach 30 Minuten Rühren wurde eine Stunde auf 40 °C erwärmt und anschließend wurde überschüssiges Wasser und Alkohol im Wasserstrahlpumpenvakuum von ca. 50 mbar 1 Stunde bei 40 °C abdestilliert. 5,7 g Natriumhydrogencarbonat wurden eingerührt und abfiltriert. Man erhielt eine klare, farblose Flüssigkeit mit einem Wasserstoffgehalt von nur 0,92 val SiH/kg gegenüber dem berechneten Sollwert von 1,65 val SiH/kg.

### Beispiel 6 (erfindungsgemäß):

44,6 g (0,25 Mol) Methyltriethoxysilan (*Dynasylan*^{®} *MTES* der Firma Evonik Degussa GmbH), 139,4 g eines α,ω-Dihydrogenpolydimethylsiloxans mit einem Wasserstoffgehalt von 3,09 val SiH/kg und 95,8 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,15 ml Trifluormethansulfonsäure zugegeben und 30 Minuten gerührt. Innerhalb von weiteren 30 Minuten wurde unter Rühren eine Mischung aus 6,75 g deionisiertem Wasser und 6,75 g Ethanol zugetropft und dann 15 g des vorgetrockneten sulfonsauren Kationenaustauscherharzes Lewatit^{®} K 2621 zugegeben (Wassergehalt wie in Beispiel 2). Nach einstündigem Rühren bei 40 °C wurde überschüssiges Wasser und Alkohol bei 5 mbar 1 Stunde bei 40 °C abdestilliert. Das Ionenaustauscherharz wurde abfiltriert, 5,6 g Natriumhydrogencarbonat wurden 30 min eingerührt und abfiltriert. Man erhielt eine klare, farblose Flüssigkeit mit einer Viskosität von 23,3 mPa*s und einem Wasserstoffgehalt von 1,61 val SiH/kg (theoretischer Wert = 1,65 val SiH/kg). Aus dem ²⁹Si-NMR-Spektrum errechnete sich ein mittlerer Verzweigungsgrad von 3,7.

### Beispiel 7 (erfindungsgemäß):

In einem 500-ml-Vierhalskolben mit angeschlossenem KPG-Rührer, Rückflusskühler und Innenthermometer wurden 100 g des gemäß Beispiel 3 hergestellten verzweigten Wasserstoffsiloxans mit dem Wasserstoffgehalt von 1,60 val SiH/kg und 328,5 g eines methyl-endverkappten Allylpolyoxyalkylens mit einem mittleren Molekulargewicht von 1.502 g/Mol (bestimmt nach Jodzahl), einem Propylenoxidanteil von 58 Gew.-% und einem Ethylenoxidanteil von 42 Gew.-% unter Rühren auf 70 °C erhitzt. Es wurden 5 ppm Platin in Form eines gemäß EP 1 520 870 modifizierten Platin(0)-Katalysators mit einer Spritze hinzugegeben. Der gasvolumetrisch bestimmte Umsatz war nach 2,5 Stunden quantitativ. Das klare, gelbliche, SiC-verknüpfte Produkt hatte eine Viskosität von 318 mPas.

### Beispiel 8 (erfindungsgemäß):

In einem 500-ml-Vierhalskolben mit angeschlossenem KPG-Rührer, Rückflusskühler, Tropftrichter und Innenthermometer wurden 190 g eines hydroxyfunktionellen Butylpolyoxyalkylens mit einem mittleren Molekulargewicht von 1.439 g/Mol (bestimmt nach der OH-Zahl), einem Propylenoxidanteil von 58 % und einem Ethylenoxidanteil von 42 % in 100 g Toluol bei 100 °C vorgelegt und 0,25 g Tris(Pentafluorophenyl)boran zugegeben. Über einen Zeitraum von 45 Minuten wurden 60 g des in Beispiel 3 beschriebenen verzweigten Wasserstoffsiloxans zugetropft. Eine deutliche Gasentwicklung war zu beobachten. Nach 2 Stunden Reaktionszeit bei 100 °C war der gasvolumetrisch bestimmte Umsatz quantitativ. Die Reaktionsmischung wurde über einen Faltenfilter filtriert und das Lösungsmittel bei 70 °C und 10 mbar am Rotationsverdampfer abdestilliert. Das leicht trübe Produkt hatte eine Viskosität von 219 mPa*s.

### Beispiel 9 (erfindungsgemäß):

42,1 g (0,24 Mol) Methyltriethoxysilan (*Dynasylan*^{®} *MTES* der Firma Evonik Degussa GmbH), 25,1 g eines Polymethylhydrogensiloxans mit einem Wasserstoffgehalt von 15,71 val SiH/kg, 126,4 g eines α,ω-Dihydrogenpolydimethylsiloxans mit einem Wasserstoffgehalt von 3,09 val SiH/kg und 82,6 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei Raumtemperatur vorgelegt, 0,167 ml Trifluormethansulfonsäure zugegeben und 30 Minuten gerührt. Innerhalb von weiteren 30 Minuten wurde unter Rühren eine Mischung aus 6,4 g deionisiertem Wasser und 8,1 ml Ethanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 10 mbar 2 Stunden bei 40 °C abdestilliert. Nach Neutralisation mit 5,5 g Natriumhydrogencarbonat und Filtration wurden 16,6 g des vorgetrockneten sulfonsauren Kationenaustauscherharzes Lewatit^{®} K 2621 zugegeben, 4 Stunden bei 40 °C gerührt und abfiltriert. Man erhielt eine klare, farblose Flüssigkeit mit einer Viskosität von 20,8 mPa*s und einem Wasserstoffgehalt von 3,01 val SiH/kg (theoretischer Wert = 3,08 val SiH/kg). Aus dem ²⁹Si-NMR-Spektrum errechnete sich ein mittlerer Verzweigungsgrad von 3,05.

### Beispiel 10 (erfindungsgemäß):

In einem 500-ml-Vierhalskolben mit angeschlossenem KPG-Rührer, Rückflusskühler und Innenthermometer wurden 60 g des gemäß Beispiel 9 hergestellten verzweigten Wasserstoffsiloxans mit dem Wasserstoffgehalt von 3,01 val SiH/kg und 204,8 g eines hydroxyfunktionellen Allylpolyoxyalkylens mit einem mittleren Molekulargewicht von 848 g/Mol (bestimmt nach Jodzahl), einem Propylenoxidanteil von 26 Gew.-% und einem Ethylenoxidanteil von 74 Gew.-% unter Rühren auf 70 °C erhitzt. Es wurden 5 ppm Platin in Form eines gemäß EP 1 520 870 modifizierten Platin(0)-Katalysators mit einer Spritze hinzugegeben. Der gasvolumetrisch bestimmte Umsatz war nach 3 Stunden quantitativ. Das klare, gelbliche, SiC-verknüpfte Produkt hatte eine Viskosität von 219,0 mPa*s.

### Beispiel 11 (erfindungsgemäß):

46,7 g (0,245 Mol) Vinyltriethoxysilan (*Dynasylan*^{®} *VTEO* der Firma Evonik Degussa GmbH), 137,7g eines α,ω-Dihydrogenpolydimethylsiloxans mit einem Wasserstoffgehalt von 3,09 val SiH/kg und 92,9 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,167 ml Trifluormethansulfonsäure zugegeben und 30 Minuten gerührt. Innerhalb von weiteren 30 Minuten wurde unter Rühren eine Mischung aus 6,6 g deionisiertem Wasser und 8,3 ml Ethanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 10 mbar 2 Stunden bei 40 °C abdestilliert. Nach Neutralisation mit 5,5 g Natriumhydrogencarbonat und Filtration wurden 16,6 g des vorgetrockneten sulfonsauren Kationenaustauscherharzes Lewatit^{®} K 2621 zugegeben, 4 Stunden bei 40 °C gerührt und abfiltriert. Man erhielt eine klare, farblose Flüssigkeit mit einer Viskosität von 18,2 mPa*s und einem Wasserstoffgehalt von 1,58 val SiH/kg (theoretischer Wert = 1,635 val SiH/kg). Aus dem ²⁹Si-NMR-Spektrum errechnete sich ein mittlerer Verzweigungsgrad von 2,4.

### Beispiel 12 (erfindungsgemäß):

57,6 g (0,231 Mol) 3-Methacryloxypropyltrimethoxysilan (*Dynasylan*^{®} *MEMO* der Firma Degussa), 130,2 g eines α,ω-Dihydrogenpolydimethylsiloxans mit einem Wasserstoffgehalt von 3,09 val SiH/kg und 87,9 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,165 ml Trifluormethansulfonsäure zugegeben und 30 Minuten gerührt. Innerhalb von weiteren 30 Minuten wurde unter Rühren eine Mischung aus 6,3 g deionisiertem Wasser und 8,0 ml Ethanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 10 mbar 2 Stunden bei 40 °C abdestilliert. Nach Neutralisation mit 5,5 g Natriumhydrogencarbonat und Filtration wurden 16,5 g des vorgetrockneten sulfonsauren Kationenaustauscherharzes Lewatit^{®} K 2621 zugegeben, 4 Stunden bei 40 °C gerührt und abfiltriert. Man erhielt eine klare, farblose Flüssigkeit mit einer Viskosität von 23,6 mPa*s und einem Wasserstoffgehalt von 1,59 val SiH/kg (theoretischer Wert = 1,55 val SiH/kg). Aus dem ²⁹Si-NMR-Spektrum errechnete sich ein mittlerer Verzweigungsgrad von 2,2.

### Beispiel 13 (erfindungsgemäß):

54,6 g eines Polymethylhydrogensiloxans mit einem Wasserstoffgehalt von 15,71 val SiH/kg, 3,5 g (0,02 Mol) Methyltriethoxysilan (*Dynasylan*^{®} *MTES* der Firma Evonik Degussa GmbH), 1,3 g Hexamethyldisiloxan (erhältlich bei der Firma Gelest Inc.) und 191,9 g Decamethylcyclopentasiloxan (erhältlich bei der Firma Gelest Inc.) wurden in einem Vierhalskolben ausgestattet mit einem KPG-Rührer, einem Innenthermometer, einem Tropftrichter und einer Destillationsbrücke unter Rühren bei Raumtemperatur vorgelegt, 0,15 ml Trifluormethansulfonsäure zugegeben und 30 Minuten gerührt. Innerhalb von weiteren 30 Minuten wurde unter Rühren eine Mischung aus 0,54 g deionisiertem Wasser und 0,54 g Ethanol zugetropft und weitere 30 Minuten gerührt. Die Reaktionsmischung wurde für 1 Stunde auf 40 °C erwärmt und anschließend wurde überschüssiges Wasser und Alkohol im Wasserstrahlpumpenvakuum von ca. 10 mbar innerhalb von 1 Stunde bei 40 °C abdestilliert. Nach Neutralisation mit 5,0 g Natriumhydrogencarbonat und Filtration wurden 15,0 g des vorgetrockneten sulfonsauren Kationenaustauscherharzes Lewatit^{®} K 2621 (Wassergehalt wie in Beispiel 2) zugegeben, 4 Stunden bei 70 °C gerührt und abfiltriert. Man erhielt eine klare, farblose Flüssigkeit mit einer Viskosität von 595,2 mPa*s und einem Wasserstoffgehalt von 3,50 val SiH/kg (theoretischer Wert = 3,53 val SiH/kg). Aus dem ²⁹Si-NMR-Spektrum errechnete sich ein mittlerer Verzweigungsgrad von 3,52.

### Beispiel 14 (erfindungsgemäß):

In einem 500-ml-Vierhalskolben mit angeschlossenem KPG-Rührer, Rückflusskühler und Innenthermometer wurden 81 g des gemäß Beispiel 13 hergestellten verzweigten Wasserstoffsiloxans mit dem Wasserstoffgehalt von 3,50 val SiH/kg unter Rühren auf 70 °C erhitzt und 5 ppm Platin in Form eines gemäß EP 1 520 870 modifizierten Platin(0)-Katalysators mit einer Spritze hinzugegeben. Über einen Tropftrichter wurden stufenweise 57,8 g Hexadecen (erhältlich bei der Firma Sigma Aldrich) und 18,4 g eines hydroxyfunktionellen Allylpolyoxyethylens mit einem mittleren Molgewicht von 409 g/Mol (bestimmt nach Jodzahl) zudosiert. Der gasvolumetrisch bestimmte Umsatz betrug nach 3 Stunden 99 %. Das leicht trübe Produkt hatte eine Viskosität von 19.640 mPa*s.

Die erfindungsgemäßen Beispiele belegen, dass mit dem erfindungsgemäßen Verfahren verzweigte Si-H-funktionelle Siloxane hergestellt werden können, ohne dass wesentliche Anteile der theoretisch zu erwartenden SiH-Funktionen abgebaut werden, wie dies bei den Vergleichsbeispielen der Fall ist.

## Patentansprüche

1. Verfahren zur Herstellung von verzweigten SiH-funktionellen Siloxanen durch Umsetzung einer Mischung, enthaltend
a) ein oder mehrere SiH-funktionelle Siloxane,
b) ein oder mehrere SiH-Funktion-freie Siloxane und
c) ein oder mehrere Trialkoxysilane,
unter Zugabe von Wasser und in Anwesenheit von mindestens einem Brönstedt-sauren Katalysator, **dadurch gekennzeichnet, dass** die Umsetzung in einem Verfahrensschritt durchgeführt wird.

2. Verfahren nach Anspruch 1, **dadurch gekennzeichnet, dass** in der Siloxankette verzweigte Wasserstoffsiloxane der allgemeinen Formel (I) 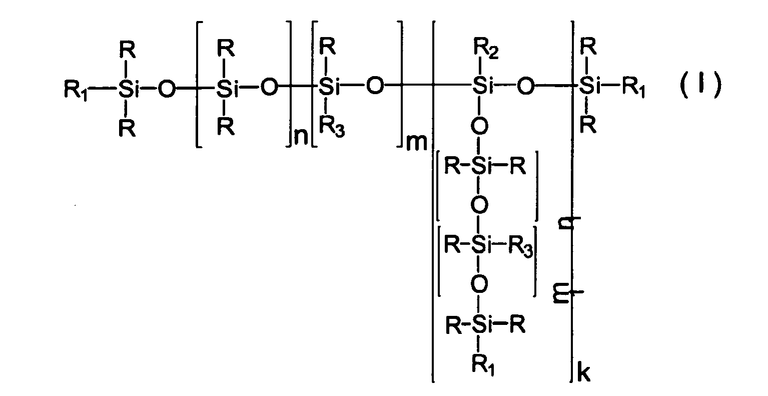 worin
n und n¹ unabhängig voneinander 0 oder größer 0 sind und (n+n¹) < 500 ist,
m und m¹ unabhängig voneinander 0 oder größer 0 und (m+m¹) < 60 ist,
k 1 bis 10 ist,
R mindestens ein Rest aus der Gruppe linearer, cyc- lischer oder verzweigter, aliphatischer oder aro- matischer, gesättigter oder ungesättigter Kohlen- wasserstoffreste mit 1 bis zu 20 C-Atomen ist,
R₁ unabhängig voneinander Wasserstoff oder R ist,
R₂ unabhängig voneinander Wasserstoff, R oder ein mit He- teroatomen substituierter, funktioneller, organischer, gesättigter oder ungesättigter Rest ausgesucht aus der Gruppe der Alkyl-, Chloralkyl-, Chloraryl-, Fluor- alkyl-, Cyanoalkyl-, Acryloxyaryl-, Acryloxyalkyl-, Methacryloxyalkyl-, Methacryloxypropyl- oder ein vi- nyl-Rest, ist,
R₃ unabhängig voneinander Wasserstoff oder R ist, mit der Mäßgabe, dass mindestens einer der Reste R₁, R₂ oder R₃, Wasserstoff ist,
hergestellt werden.

3. Verfahren gemäß Anspruch 1 oder 2, **dadurch gekennzeichnet, dass** die Umsetzung bei einer Temperatur von 0 °C bis 100 °C durchgeführt wird.

4. Verfahren gemäß mindestens einem der Ansprüche 1 bis 3, **dadurch gekennzeichnet, dass** 0,5 bis 30 Mol Wasser pro Mol Trialkoxysilan eingesetzt werden.

5. Verfahren gemäß mindestens einem der Ansprüche 1 bis 4, **dadurch gekennzeichnet, dass** der Katalysator in Mengen von 0,01 bis 10 Ges.-% bezogen auf die Summe der Masse an eingesetzten Ausgangsstoffen eingesetzt wird.

6. Verfahren gemäß mindestens einem der Ansprüche 1 bis 5, **dadurch gekennzeichnet, dass** als Katalysator mindestens eine Säure und mindestens ein saurer Ionenaustauscher eingesetzt werden.

7. Verfahren gemäß mindestens einem der Ansprüche 1 bis 6, **dadurch gekennzeichnet, dass** als Katalysator eine Mischung aus Trifluormethansulfonsäure und sulfonsauren Ionenaustauschern eingesetzt wird.

8. Verfahren gemäß mindestens einem der Ansprüche 1 bis 7, **dadurch gekennzeichnet, dass** als verzweigte SiH-funktionelle Siloxane solche hergestellt werden, bei denen die SiH-Funktionen rein endständig, rein seitenständig oder gemischt end- und seitenständig im Siloxan angeordnet sind.

9. Verfahren gemäß mindestens einem der Ansprüche 1 bis 8, **dadurch gekennzeichnet, dass** organisch funktionalisierte Trialkoxysilane als Verzweigungseinheit einäquilibriert werden.

## Claims

1. Process for preparing branched SiH-functional siloxanes by converting a mixture comprising
a) one or more SiH-functional siloxanes,
b) one or more SiH function-free siloxanes and
c) one or more trialkoxysilanes,
with addition of water and in the presence of at least one Brønsted-acidic catalyst, **characterized in that** the reaction is performed in one process step.

2. Process according to Claim 1, **characterized in that** hydrosiloxanes with branching in the siloxane chain of the general formula (I) 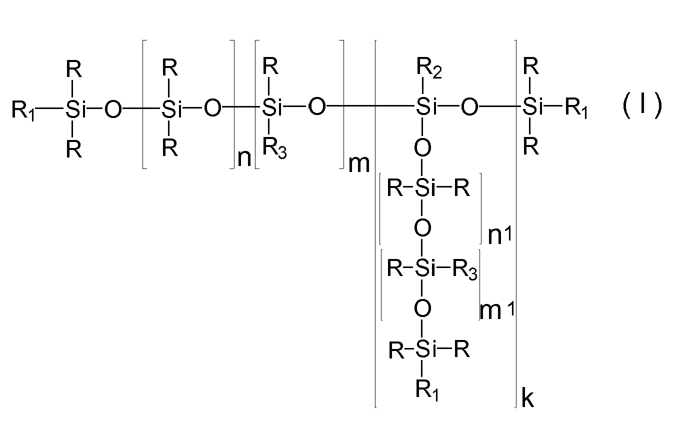 in which
n and n¹ are each independently 0 or greater than 0 and (n+n¹) is < 500,
m and m¹ are each independently 0 or greater than 0 and (m+m¹) is < 60,
k is 1 to 10,
R is at least one radical from the group of linear, cyclic or branched, aliphatic or aromatic, saturated or unsaturated hydrocarbon radicals having 1 up to 20 carbon atoms,
R₁ is independently hydrogen or R,
R₂ is independently hydrogen, R or a heteroatom- substituted, functional, organic, saturated or unsaturated radical selected from the group of the alkyl, chloroalkyl, chloroaryl, fluoroalkyl, cyanoalkyl, acryloyloxyaryl, acryloyloxyalkyl, methacryloyloxyalkyl, methacryloyloxypropyl or a vinyl radical,
R₃ is independently hydrogen or R, with the proviso that at least one of the R₁, R₂ and R₃ radicals is hydrogen,
are prepared.

3. Process according to Claim 1 or 2, **characterized in that** the reaction is performed at a temperature of 0°C to 100°C.

4. Process according to at least one of Claims 1 to 3, **characterized in that** 0.5 to 30 mol of water per mole of trialkoxysilane are used.

5. Process according to at least one of Claims 1 to 4, **characterized in that** the catalyst is used in amounts of 0.01 to 10% by weight based on the sum of the mass of starting materials used.

6. Process according to at least one of Claims 1 to 5, **characterized in that** the catalyst used is at least one acid and at least one acidic ion exchanger.

7. Process according to at least one of Claims 1 to 6, **characterized in that** the catalyst used is a mixture of trifluoromethanesulphonic acid and sulphonic acid ion exchangers.

8. Process according to at least one of Claims 1 to 7, **characterized in that** the branched SiH-functional siloxanes prepared are those in which the SiH functions are purely in terminal positions, purely in pendant positions or in a mixture of terminal and pendant positions in the siloxane.

9. Process according to at least one of Claims 1 to 8, **characterized in that** organically functionalized trialkoxysilanes are included in the equilibrium as a branching unit.

## Revendications

1. Procédé pour la préparation de siloxanes ramifiés à fonction SiH, par mise en réaction d'un mélange contenant
a) un ou plusieurs siloxanes à fonction SiH,
b) un ou plusieurs siloxanes sans fonction SiH et
c) un ou plusieurs trialcoxysilanes,
avec addition d'eau et en présence d'au moins un catalyseur acidifié avec un acide de Brönsted, **caractérisé en ce que** la réaction est effectuée en une étape de processus.

2. Procédé selon la revendication 1, **caractérisé en ce qu'**on prépare des hydrogénosiloxanes ramifiés dans la chaîne siloxane, de formule générale (I) 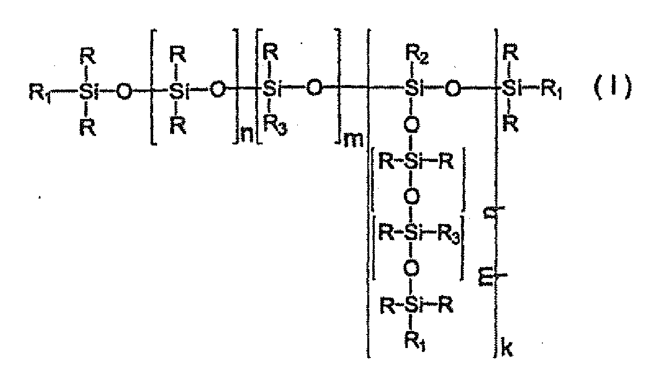 dans laquelle
n et n¹ valent, indépendamment l'un de l'autre, 0 ou > 0 et (n+n¹) est < 500,
m et m¹ valent, indépendamment l'un de l'autre, 0 ou > 0 et (m+m¹) est < 60,
k vaut de 1 à 10,
R est au moins un radical choisi dans le groupe des radicaux hydrocarbonés linéaires, cycliques ou ramifiés, aliphatiques ou aromatiques, saturés ou insaturés, ayant de 1 à 20 atomes de carbone,
R₁ est, chaque fois indépendamment, un atome d'hydrogène ou R,
R₂ est, chaque fois indépendamment, un atome d'hydrogène, R ou un radical organique fonctionnel, saturé ou insaturé, substitué par des hétéroatomes, choisi dans le groupe des radicaux alkyle, chloralkyle, chloraryle, fluoroalkyle, cyanoalkyle, acryloxyaryle, acryloxyalkyle, méthacryloxyalkyle, méthacryloxypropyle ou un radical vinyle,
R₃ est, chaque fois indépendamment, un atome d'hydrogène ou R, étant entendu qu'au moins l'un des radicaux R₁, R₂ ou R₃ est un atome d'hydrogène.

3. Procédé selon la revendication 1 ou 2, **caractérisé en ce que** la réaction est effectuée à une température de 0 °C à 100 °C.

4. Procédé selon au moins l'une des revendications 1 à 3, **caractérisé en ce qu'**on utilise 0,5 à 30 moles d'eau par mole de trialcoxysilane.

5. Procédé selon au moins l'une des revendications 1 à 4, **caractérisé en ce que** le catalyseur est utilisé en quantités de 0,01 à 10 % en poids, par rapport à la somme des masses des produits de départ utilisés.

6. Procédé selon au moins l'une des revendications 1 à 5, **caractérisé en ce qu'**on utilise comme catalyseur au moins un acide et au moins un échangeur d'ions acide.

7. Procédé selon au moins l'une des revendications 1 à 6, **caractérisé en ce qu'**on utilise comme catalyseur un mélange d'acide trifluorométhanesulfonique et d'échangeurs d'ions acidifiés avec de l'acide sulfonique.

8. Procédé selon au moins l'une des revendications 1 à 7, **caractérisé en ce qu'**on prépare en tant que siloxanes ramifiés à fonction SiH ceux dans lesquels les fonctions SiH sont disposées dans le siloxane purement en bout de chaîne, purement latéralement ou à la fois en bout de chaîne et latéralement.

9. Procédé selon au moins l'une des revendications 1 à 8, **caractérisé en ce que** des trialcoxysilanes à fonctionnalisation organique sont incorporés en tant qu'unité de ramification.
